# EUROPÄISCHE PATENTSCHRIFT

(11) **EP 0 486 818 B1**
(45) Veröffentlichungstag und Bekanntmachung des Hinweises auf die Patenterteilung: **07.04.1999**
(21) Anmeldenummer: 91117867.1
(22) Anmeldetag: 19.10.1991
(51) Int. Cl.: G06F 12/06

(54) **Steuerungssystem**
Control system
Système de commande

(30) Priorität: 22.11.1990 DE 4037143
(43) Veröffentlichungstag der Anmeldung: 27.05.1992
(73) Patentinhaber: ROBERT BOSCH GMBH, 70442 Stuttgart (DE)
(72) Erfinder: Bräuninger, Jürgen, Dr.rer.nat., W-7000 Stuttgart 31 (DE); Schlichenmaier, Andreas, Dipl.-Ing. (FH), W-7129 Zaberfeld 2 (DE); Blanc, Martin, Dipl.-Ing. (FH), W-7134 Knittlingen (DE); Emig, Reiner, Dipl.-Ing. (FH), Ohta-ku, Tokyo 145 (JP); Stumpe, Werner, Dipl.-Ing. (FH), W-7000 Stuttgart 50 (DE); Wrede, Jürgen, Dipl.-Ing. (TU), W-7000 Stuttgart 50 (DE)

(56) Entgegenhaltungen:
- EP-A- 0 044 949
- US-A- 4 188 670
- IBM TECHNICAL DISCLOSURE BULLETIN, Bd. 29, Nr. 1, Juni 1986, NEW YORK, US; Seiten 416 - 417; 'Loading Device Channel Address via Scan Ring'

## Beschreibung

### Stand der Technik

Es ist bekannt, ein ABS-System mehrkanalig auszubilden. Die einzelnen Kanäle steuern im ABS-Fall den Druck an den Bremsen einzelner Räder oder Radgruppen. Man kann zusätzlich ein übergeordnetes zentrales Steuergerät vorsehen, um mit Hilfe des einzelnen ABS-Kanals den Bremsdruck an den einzelnen Räder in Abhängigkeit von anderen Kriterien zu beeinflussen (z.B. elektrisches Bremspedal). Da die einzelnen Kanäle über einen gemeinsamen Datenbus vom zentralen Steuergerät ansteuerbar sein müssen, und die Kanäle auch untereinander Daten austauschen sollen, muß jedem einzelnen eine Adresse vorgegeben werden, die die Stelle kennzeichnet (z.B. Bremse vorn links), für die der Kanal gerade zuständig ist. Da eine Austauschbarkeit der als Module ausgebildeten Kanäle jederzeit möglich sein soll, ist eine interne Koordinierung vorab nicht sinnvoll. Andererseits ist eine Koordinierung von außen mangels Steckerpins oft nicht möglich.

Aus der EP-A 44 949 ist ein Steuerungssystem bekannt, das ein zentrales Steuergerät und mehrere gleichartige, einzelne Module aufweist, die alle durch eine gemeinsame Datenleitung miteinander verbunden sind. Dabei ist jedes Modul über einen Adreßbus mit dem Steuergerät verbunden. Durch Aktivierung des Adreßbusses bei gleichzeitiger Benutzung der Datenleitung werden die Module mit einer Adresse versehen, das heißt konfiguriert.

### Vorteile der Erfindung

Bei der Erfindung werden im einen Fall die Signalleitungen oder die Versorgungsleitungen vom zentralen Steuergerät zu den Modulen sequentiell aktiviert, und dabei über die Datenleitung die Adressierung des Moduls vorgenommen, dessen Leitung gerade aktiviert wurde.

Im anderen Fall werden über die Verbindungsleitungen zwischen zentralen Steuergerät und den Modulen unterschiedliche Datenwörter übertragen, die der Adressierung dienen.

### Figurenbeschreibung

Anhand der Zeichnung werden Ausführungsbeispiele der Erfindung erläutert.
Es zeigen:
- Fig. 1: ein erstes Ausführungsbeispiel
- Fig. 2: ein anderes Ausführungsbeispiel
- Fig. 3: ein dazugehörendes Diagramm

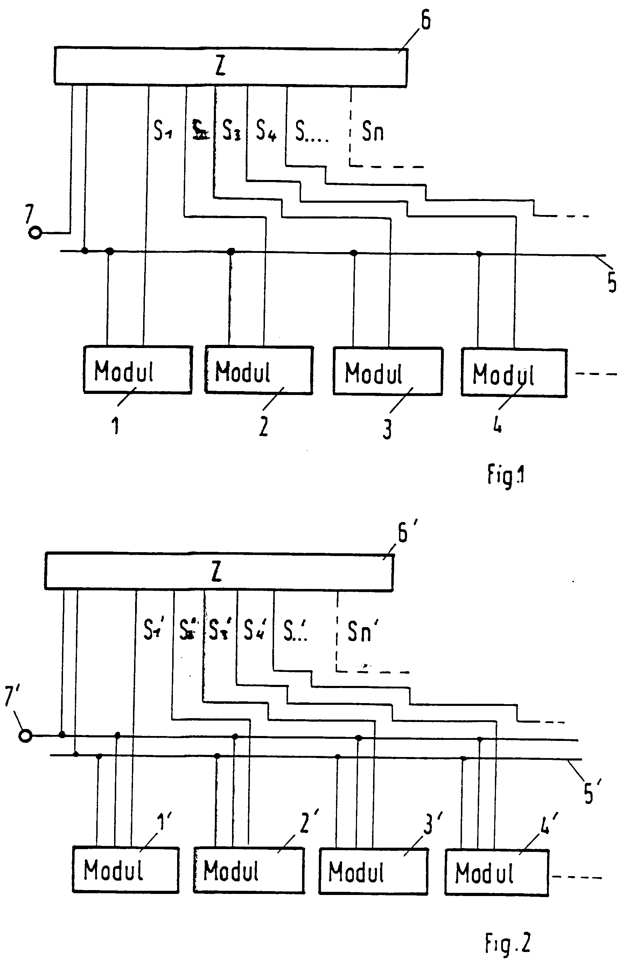

In Fig. 1 sind mit 1 bis 4 vier gleiche Module bezeichnet, die z.B. für die Bremsdruckregelung an einzelnen Rädern oder Radgruppen eines Nutzkraftfahrzeugs zuständig sind. Über einen Datenbus 5 sind diese Module miteinander und mit einem zentralen Steuergerät 6 verbunden. Über diesen Datenbus 5 können die Module 1 bis 4 miteinander kommunizieren und auch mit dem zentralen Steuergerät 6. An einer Klemme 7 liegt die Stromversorgung für das Gesamtsystem an. Die Stromversorgung kann im Steuergerät 6 auf die Leitungen S1 bis S4 zu den einzelnen Modulen 1 bis 4 durchgeschaltet werden. Wird das System eingeschaltet (z.B. durch Betätigen des Zündschlüssels), so liegt Versorgungsspannung am zentralen Steuergerät an. Das zentrale Steuergerät 6 schaltet dann die Stromversorgung zum Model 1 über Leitung S1 durch und gibt gleichzeitig die Adresse für den Modul 1 auf den Datenbus 5. Die Adresse kann nur vom Modul 1 verarbeitet und abgespeichert werden.

Nach einer kurzen Zeit wird dann Modul 2 an die Stromversorgung angeschaltet und gleichzeitig dessen Adresse auf den Datenbus 5 gegeben. Da Modul 1 bereits besetzt ist, kann nur Modul 2 die Adresse verarbeiten und abspeichern. Dies setzt sich fort, bis allen Modulen ihre Adressen zugeteilt sind. Danach kann die Zusammenarbeit des zentralen Steuergeräts 6 mit den einzelnen Modulen 1 bis 4 über den Datenbus 5 durch Zufügen der Adresse des gesuchten Moduls zu der zu übertragenden Nachricht stattfinden.

Durch diese erfindungsgemäße Maßnahme wird erreicht, daß z.B. auch nach einem Auswechseln eines Moduls, dieser die richtige Adresse mitgeteilt erhält.

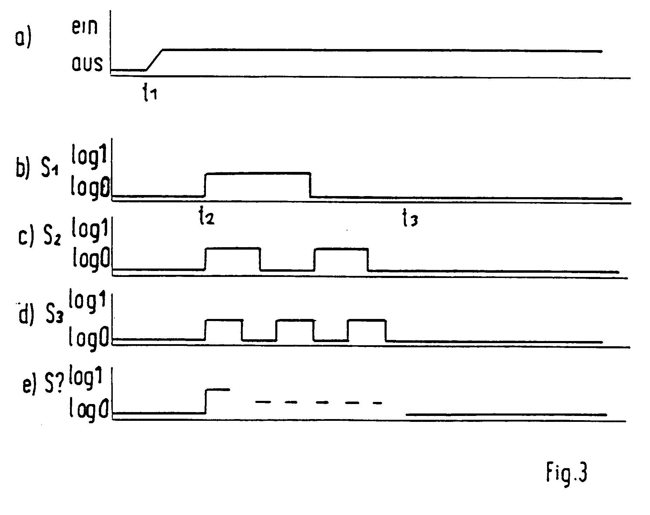

Fig. 2 unterscheidet sich von Fig. 1 nur dadurch, daß die Module 1' bis 4' und das zentrale Steuergerät parallel an der Stromversorgung (Klemme 7') liegen. Anhand des Diagramms der Fig. 3 wird die Adressierung beschrieben.

Zum Zeitpunkt tl wird das System vom Fahrer eingeschaltet (Fig. 3a). Zum Zeitpunkt t2 werden vom Zentralsteuergerät unterschiedliche Folge von log. 0 und log. 1 auf die Signalleitungen S1' bis S4' geschaltet. Im Zeitraum t2 - t3 werden diese Signale von den identischen Modulen empfangen und ausgewertet.

Nach Adresserkennung und Signalprüfung der auf der Signalleitung empfangenen Daten kann zum Zeitpunkt t3 eine Identifierfestlegung über Bus 5' stattfinden und die Kommunikation mit dem Zentralsteuergerät begonnen werden. Diese Kommunikation dient dem Zentralsteuergerät als Quittierung der "Einschaltprozedur".

Über die für weitere Zwecke verwendbaren Signalleitungen S1' .... Sn' kann somit den "Modulen" beim Einschalten eine Adresse zugeordnet werden, ohne daß die an sich gleichen Module unterschiedlich kodiert sein müssen.

Die Konfiguration kann betriebsspannungsunabhängig in den Modulen gespeichert werden und muß dann nur bei Erstinbetriebnahme oder Modultausch durchgeführt werden.

## Patentansprüche

1. Steuerungssystem bestehend aus einem zentralen Steuergerät (6) und mehreren gleichartigen, einzelnen Modulen (1, 2, 3, 4), die über einen gemeinsamen Datenbus (5) miteinander verbunden sind, wobei die einzelnen Module (1, 2, 3, 4) über Leitungen (S1 bis Sn) mit dem Steuergerät (6) verbunden sind und diese Leitungen die Spannungsversorgungsleitungen sind, wobei das zentrale Steuergerät (6) die Spannungsversorgung zu den einzelnen Modulen (1, 2, 3, 4) sequentiell einschaltet und durch gleichzeitige Übermittlung der Adresse zu dem jeweiligen Modul auf dem Datenbus (5) die Konfiguration der einzelnen Module vornimmt.

2. Steuersystem nach Anspruch 1, dadurch gekennzeichnet, daß die Konfiguration nur in speziellen Betriebszuständen durchgeführt wird.

3. Steuerungssystem nach einem der Ansprüche 1 und 2, dadurch gekennzeichnet, daß die Konfiguration bei jedem Einschalten erneut durchgeführt wird.

4. Steuerungssystem bestehend aus einem zentralen Steuergerät (6') und mehreren gleichartigen, einzelnen Modulen (1', 2', 3', 4'), die über einen gemeinsamen Datenbus (5') miteinander verbunden sind und parallel an die Stromversorgung angeschlossen sind, wobei je eine Leitung zwischen dem Steuergerät und den einzelnen Modulen (S1' bis Sn') vorgesehen ist und wobei die Konfiguration (Adressierung) der einzelnen Module durch Übertragung unterschiedlicher Datenwörter vom Steuergerät (6') zu den Modulen (1', 2', 3', 4') über diese Leitungen nach Einschalten der Stromversorgung erfolgt.

## Claims

1. Control system consisting of a central processor (6) and a number of similar individual modules (1, 2, 3, 4) which are connected to one another via a common data bus (5), the individual modules (1, 2, 3, 4) being connected to the processor (6) via lines (S1 to Sn) and these lines being the voltage supply lines, wherein the central processor (6) sequentially switches on the voltage supply to the individual modules (1, 2, 3, 4) and configures the individual modules by simultaneously transmitting the address to the respective module on the data bus (5).

2. Control system according to Claim 1, characterized in that the configuring is only performed in special operating states.

3. Control system according to one of Claims 1 and 2, characterized in that the configuring is performed again with each switch-on.

4. Control system consisting of a central processor (6') and a number of similar individual modules (1', 2', 3', 4') which are connected to one another via a common data bus (5') and are connected in parallel to the power supply, wherein in each case one line is provided between the processor and the individual modules (S1' to Sn') and the configuring (addressing) of the individual modules is performed by transmitting different data words from the processor (6') to the modules (1', 2', 3', 4') via these lines after the power supply has been switched on.

## Revendications

1. Système de commande consistant en un appareil central de commande (6) et en plusieurs modules différents (1, 2, 3, 4) qui sont reliés les uns aux autres par un bus de données commun (5), les différents modules (1, 2, 3, 4) étant reliés à l'appareil de commande (6) par des lignes (S1 à Sn) et ces lignes étant les lignes d'alimentation en tension, l'appareil central de commande (6) branchant de façon séquentielle l'alimentation en tension sur les différents modules (1, 2, 3, 4) et entreprenant la configuration des différents modules par la transmission simultanée de l'adresse au module correspondant sur le bus de données (5).

2. Système de commande selon la revendication 1,
caractérisé en ce que
la configuration n'est effectuée que dans des états de fonctionnement spéciaux.

3. Système de commande selon l'une des revendications 1 et 2,
caractérisé en ce que
la configuration est effectuée à nouveau lors de chaque branchement.

4. Système de commande consistant en un appareil central de commande (6') et en plusieurs modules différents (1', 2', 3', 4') qui sont reliés les uns aux autres par un bus de données commun (5'), et sont raccordés en parallèle à l'alimentation en courant, chaque fois une ligne étant prévue entre l'appareil de commande et les différents modules (S1' à Sn') et la configuration (l'adressage) des différents modules ayant lieu par transmission de différents mots contenant des données par l'appareil de commande (6') aux modules (1', 2', 3', 4') par l'intermédiaire de ces lignes après le branchement de l'alimentation en courant.
